# EUROPÄISCHE PATENTANMELDUNG

(11) **EP 4 210 194 A1**
(43) Veröffentlichungstag der Anmeldung: **12.07.2023**
(21) Anmeldenummer: 22150839.3
(22) Anmeldetag: 11.01.2022
(51) Int. Cl.: H02J 7/00, B25F 5/00

(54) **VERFAHREN ZUM LADEN EINER ENERGIEVERSORGUNGSVORRICHTUNG, SOWIE SYSTEM UMFASSEND EINE ENERGIEVERSORGUNGSVORRICHTUNG UND EIN LADEGERÄT**

(71) Anmelder: Hilti Aktiengesellschaft, 9494 Schaan (LI)
(72) Erfinder: Mayer, Stefan, 86857 Hurlach (DE); Koscheck, David, 86899 Landsberg (DE); Hauser, Klaus, 86830 Schwabmünchen (DE)
(74) Vertreter: Hilti Aktiengesellschaft Corporate Intellectual Property

(57) **Zusammenfassung**

Die Erfindung betrifft ein Verfahren zum Laden einer Energieversorgungsvorrichtung durch ein Ladegerät, wobei die Energieversorgungsvorrichtung eine Reihe von Energiespeicherzellen aufweist, sowie eine Steuerelektronik (CMS). In einem zweiten Aspekt betrifft die Erfindung ein System zur Durchführung des Ladeverfahrens, wobei das System eine Energieversorgungsvorrichtung und ein Ladegerät umfasst. Die Steuerelektronik der Energieversorgungsvorrichtung ist dazu eingerichtet, Ströme und/oder Spannungen der Energieversorgungsvorrichtung und/oder ihrer Energiespeicherzellen zu überwachen, sowie mit dem Ladegerät zu kommunizieren. Im Rahmen des vorgeschlagenen Ladeverfahrens wird eine schwächste Energiespeicherzelle bestimmt, wobei anhand der Spannung der schwächsten Energiespeicherzelle ein Übergang von einer ersten Ladephase in eine zweite Ladephase des Ladevorgangs initiiert wird.

## Beschreibung

### VERFAHREN ZUM LADEN EINER ENERGIEVERSORGUNGSVORRICHTUNG, SOWIE SYSTEM UMFASSEND EINE ENERGIEVERSORGUNGSVORRICHTUNG UND EIN LADEGERÄT

Die Erfindung betrifft ein Verfahren zum Laden einer Energieversorgungsvorrichtung durch ein Ladegerät, wobei die Energieversorgungsvorrichtung eine Reihe von Energiespeicherzellen aufweist, sowie eine Steuerelektronik (CMS). In einem zweiten Aspekt betrifft die Erfindung ein System zur Durchführung des Ladeverfahrens, wobei das System eine Energieversorgungsvorrichtung und ein Ladegerät umfasst. Die Steuerelektronik der Energieversorgungsvorrichtung ist dazu eingerichtet, Ströme und/oder Spannungen der Energieversorgungsvorrichtung und/oder ihrer Energiespeicherzellen zu überwachen, sowie mit dem Ladegerät zu kommunizieren. Im Rahmen des vorgeschlagenen Ladeverfahrens wird eine schwächste Energiespeicherzelle bestimmt, wobei anhand der Spannung der schwächsten Energiespeicherzelle ein Übergang von einer ersten Ladephase in eine zweite Ladephase des Ladevorgangs initiiert wird. Der Ladevorgang der Energieversorgungsvorrichtung wird durch die Steuerelektronik der Energieversorgungsvorrichtung beendet, wenn ein minimaler Strom einer der Energiespeicherzellen der Energieversorgungsvorrichtung erreicht wird.

### Hintergrund der Erfindung:

Die Erfindung ist auf dem technischen Gebiet der aufladbaren Energieversorgungsvorrichtung angesiedelt. Im Stand der Technik sind für solche aufladbaren Energieversorgungsvorrichtung Ladeverfahren bekannt, mit denen aber in vielen Situationen die Energieversorgungsvorrichtung nicht optimal aufgeladen werden kann. Mit anderen Worten wird ein Füllstand erreicht, der bei optimaler Gestaltung des Ladeverfahrens höher sein könnte.

Bei Auslieferung einer neuen Energieversorgungsvorrichtung kann diese üblicherweise mit einer vollen Kapazität von 100 % aufgeladen werden. Man spricht von einem 100%igen Ladungszustand (State of Charge, SOC) der Energieversorgungsvorrichtung. Mit der Zeit treten allerdings Alterungserscheinungen auf und es kann zu einer Verringerung des Ladevermögens der Energieversorgungsvorrichtung aufgrund von nicht sachgerechtem Aufladen der Energieversorgungsvorrichtung kommen. Dadurch verringert sich der sog. Gesundheitszustand (State of Health, SOH) der Energieversorgungsvorrichtung. Ein aktueller Gesundheitszustand einer nicht mehr neuen Energieversorgungsvorrichtung kann beispielsweise dadurch bestimmt werden, dass die volle Kapazität der nicht mehr neuen Energieversorgungsvorrichtung und die volle Kapazität der Energieversorgungsvorrichtung im neuen oder Auslieferungs-Zustand miteinander in Relation gesetzt werden.

Bei konventionellen Ladeverfahren, wie sie aus dem Stand der Technik bekannt sind, kann es nachteiligerweise zu einer Beendigung des Ladeverfahrens kommen, obwohl noch nicht alle Energiespeicherzellen der Energieversorgungsvorrichtung vollständig geladen sind. Dies kann insbesondere dann passieren, wenn die Energiespeicherzellen der Energieversorgungsvorrichtung ungleiche Ladungszustände oder Ladungshistorien aufweisen. Häufig tritt ein unerwünschtes vorzeitiges Ende des Ladeverfahrens dann auf, wenn eine der Zellen im Vergleich zu den anderen Zellen der Energieversorgungsvorrichtung eine so hohe Spannung aufweist, dass ein weiteres Laden verhindert werden muss. Eine solche Situation kann insbesondere bei älteren Energieversorgungsvorrichtungen auftreten.

Aufgabe der vorliegenden Erfindung ist es daher, die vorstehend beschriebenen Mängel und Nachteile des Standes der Technik zu überwinden und ein verbessertes Ladeverfahren und ein entsprechendes System aus Energieversorgungsvorrichtung und Ladegerät zur Durchführung des Ladeverfahrens bereitzustellen. Mit der Erfindung soll ein höherer Füllstand der Energieversorgungsvorrichtung nach Abschluss des Ladeverfahrens ermöglicht werden, als dies derzeit im Stand der Technik möglich ist.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch ein Verfahren zum Laden einer Energieversorgungsvorrichtung durch ein Ladegerät gelöst, wobei die Energieversorgungsvorrichtung eine Reihe von Energiespeicherzellen aufweist, sowie eine Steuerelektronik. Das Verfahren ist durch die folgenden Verfahrensschritte gekennzeichnet:
a) Verbinden der Energieversorgungsvorrichtung mit dem Ladegerät, um die Energieversorgungsvorrichtung aufzuladen,
b) Start des Ladevorgangs in einer ersten Ladephase,
c) Bestimmung einer schwächsten Energiespeicherzelle durch die Steuerelektronik der Energieversorgungsvorrichtung, wobei die Energiespeicherzelle mit der tiefsten Spannung zu Beginn der ersten Ladephase des Ladevorgangs als schwächste Energiespeicherzelle betrachtet wird,
d) Ermittlung eines Ladestroms für die Energieversorgungsvorrichtung durch die Steuerelektronik anhand der schwächsten Energiespeicherzellen,
e) Übermittlung des zuvor ermittelten Ladestroms von der Steuerelektronik an das Ladegerät,
f) Laden der Energieversorgungsvorrichtung mit dem zuvor ermittelten Ladestrom in der ersten Ladephase,
g) Übergang von der ersten Ladephase in eine zweite Ladephase des Ladevorgangs, wenn eine maximale Spannung einer der Energiespeicherzellen erreicht ist.

Durch das vorgeschlagene Verfahren ist es möglich, die einzelnen Energiespeicherzellen ("Zellen") der Energieversorgungsvorrichtung zu einem höheren Füllstand aufzuladen. Dadurch kann die Energiemenge, die mit einem Ladevorgang in die Energieversorgungsvorrichtung transferiert wird, erheblich erhöht werden, so dass sich vorteilhafterweise die Arbeits-Reichweite der Energieversorgungsvorrichtung erhöht. Die Energieversorgungsvorrichtung kann vorzugsweise in einer Werkzeugmaschine verwendet werden, um die Werkzeugmaschine mit elektrischer Energie zu versorgen. Wenn pro Ladevorgang mehr Energie in der Energieversorgungsvorrichtung zur Verfügung steht, verlängert sich vorteilhafterweise der Zeitraum zwischen den einzelnen Ladevorgängen und die Arbeit mit der Werkzeugmaschine kann wesentlich effizienter und zeitsparender durchgeführt werden. Die Erfindung ermöglicht es insbesondere, die Energieversorgungsvorrichtung zumindest bis zu einer maximalen Kapazität der schwächsten Zellen aufzuladen. Dadurch wird vorteilhafterweise der im Vergleich zu konventionellen Ladeverfahren höhere Füllstand der Energieversorgungsvorrichtung erreicht.

Es ist im Sinne der Erfindung bevorzugt, in der ersten Ladephase des Ladeverfahrens die Energiespeicherzelle mit der tiefsten Spannung zu betrachten. Wenn eine Energiespeicherzelle sehr tief entladen ist, kann sie vorzugsweise mit einem reduzierten elektrischen Strom aufgeladen werden. Die schwächste Energiespeicherzelle kann beispielsweise diejenige Energiespeicherzelle sein, die am wenigsten Ladungsmenge speichern bzw. aufnehmen kann.

Die Steuerelektronik der Energieversorgungsvorrichtung kann von einem sog. Zellenmanagementsystem (Cell Management System, CMS) gebildet werden. Die Steuerelektronik ist Bestandteil der Energieversorgungsvorrichtung und weist verschiedene Funktionalitäten auf. Beispielsweise ist die Steuerelektronik der Energieversorgungsvorrichtung dazu eingerichtet, Ströme und/oder Spannungen der Energieversorgungsvorrichtung und/oder ihrer Energiespeicherzellen zu überwachen. Dazu kann die Steuerelektronik der Energieversorgungsvorrichtung entsprechende Sensoren oder Meßstellen aufweisen, die die Ströme und/oder Spannungen der einzelnen Zellen oder der Energieversorgungsvorrichtung als Ganzes erfassen. Diese Erfassung kann im Wesentlichen kontinuierlich erfolgen oder mit einer bestimmten, beispielsweise vorgegebenen Meß-Frequenz. Die erfassten Strom- und/oder Spannungsdaten können aufgezeichnet und/oder abgespeichert werden, wobei die Energieversorgungsvorrichtung dazu vorzugsweise einen Datenspeicher aufweisen kann. Die erfassten Strom- und/oder Spannungsdaten können insbesondere dazu verwendet werden, eine schwächste Energiespeicherzelle der Energieversorgungsvorrichtung anhand der Spannungen der Energiespeicherzellen zu bestimmen. Mit anderen Worten ist die Steuerelektronik der Energieversorgungsvorrichtung dazu in der Lage, eine schwächste Energiespeicherzelle der Energieversorgungsvorrichtung anhand der Spannungen der Energiespeicherzellen zu bestimmen. Es ist im Sinne der Erfindung ganz besonders bevorzugt, dass die Steuerelektronik der Energieversorgungsvorrichtung in der ersten Ladephase des Ladevorgangs diejenige Zelle als "schwächste Zelle" definiert, die zu Beginn der ersten Ladephase die niedrigste Spannung aufweist.

Es ist im Sinne der Erfindung bevorzugt, dass eine leere Energiespeicherzelle durch eine niedrige Spannung gekennzeichnet ist, während eine volle Energiespeicherzelle durch eine hohe Spannung gekennzeichnet ist. Es ist im Kontext der vorliegenden Erfindung bevorzugt, dass die Spannung der einzelnen Zellen in regelmäßigen Abständen überwacht wird, wobei typische Abstände der Abfrage beispielsweise bei 100 Millisekunden (ms) liegen können. Diese regelmäßige Überwachung hat sich vor allem dann als besonders zweckmäßig erwiesen, wenn die Spannung der Energiespeicherzellen an einem unteren und/oder einem oberen Ende des zulässigen Bereichs liegt.

Der Erfindung liegt der Grundgedanke zugrunde, das Ladeverfahren an den Bedürfnissen und Erfordernisse der schwächsten Energiespeicherzelle der Energieversorgungsvorrichtung auszurichten. Die Erfinder haben erkannt, dass beim Laden einer Energieversorgungsvorrichtung dadurch ein höherer Füllstand erreicht werden kann als bei konventionellen Ladeverfahren, wie sie aus dem Stand der Technik bekannt sind. Je nach Ladephase des Ladevorgangs können unterschiedliche Energiespeicherzellen der Energieversorgungsvorrichtung als "schwächste Zelle" bestimmt werden, wobei die Bestimmung anhand der Spannung der Energiespeicherzellen erfolgt. Es kann im Sinne der Erfindung auch bevorzugt sein, dass ein und dieselbe Zelle in beiden Ladephasen als schwächste Zelle angesehen wird, wenn die Spannungsverhältnisse in der Energieversorgungsvorrichtung entsprechend sind. In diesem Fall weist die eine Zelle zu Beginn der ersten Ladephase des Ladevorgangs die niedrigste Spannung unter den Zellen auf und zu Beginn der zweiten Ladephase die höchste Spannung unter den Energiespeicherzellen der Energieversorgungsvorrichtung.

Wenn bei der Überwachung der Spannungen der Energiespeicherzellen der Energieversorgungsvorrichtung eine Zelle auffällt, die eine abweichende Spannung im Vergleich zu den anderen Zellen aufweist, so betrachtet die Steuerelektronik der Energieversorgungsvorrichtung diese Zelle als "schwächste Zelle" im Sinne der Erfindung. Zu Beginn der ersten Ladephase des Ladevorgangs kann diejenige Zelle als "schwächste Zelle" im Sinne der Erfindung betrachtet werden, die die tiefste Spannung und damit den niedrigsten Füllstand aufweist. Es ist im Sinne der Erfindung bevorzugt, dass die Zelle mit dem geringsten Gesundheitszustand (State of Health, SOH) am Ende ihrer Entladung die geringste Spannung unter den Energiespeicherzellen der Energieversorgungsvorrichtung aufweist. Vorzugsweise ist diese "schwächste Zelle" während des Ladevorgangs dadurch gekennzeichnet, dass sie den stärksten Spannungsanstieg aufweist. Es ist im Sinne der Erfindung bevorzugt, dass diese "schwächste Zelle" am Ende des Ladevorgangs auch die höchste Spannung unter den Energiespeicherzellen der Energieversorgungsvorrichtung aufweist.

Darüber hinaus ist die Steuerelektronik der Energieversorgungsvorrichtung dazu in der Lage, mit dem Ladegerät zu kommunizieren. Vorzugsweise kann zwischen der Energieversorgungsvorrichtung und dem Ladegerät eine Kommunikationsverbindung bestehen, über die Stromdaten, Spannungsdaten und/oder Steuerbefehle zwischen der Energieversorgungsvorrichtung und dem Ladegerät ausgetauscht werden können. Die Kommunikationsverbindung kann drahtgebunden oder drahtlos ausgebildet sein, wobei eine drahtgebundene Kommunikation zwischen Energieversorgungsvorrichtung und Ladegerät im Sinne der Erfindung bevorzugt ist. Beispielsweise kann die Steuerelektronik der Energieversorgungsvorrichtung eine Anfrage an das Ladegerät stellen, um die einen Stromwert der Energieversorgungsvorrichtung zu erfahren. Beispielsweise kann die Steuerelektronik der Energieversorgungsvorrichtung nach einem Gesamtstrom fragen, der während des Ladevorgangs von dem Ladegerät in die Energieversorgungsvorrichtung fließt. Es ist im Sinne der Erfindung bevorzugt, dass sich dieser Gesamtstrom bei parallelgeschalteten Zellen auf die Einzelstränge der Energieversorgungsvorrichtung aufteilt.

In einer alternativen Ausgestaltung der Erfindung kann die Steuerelektronik der Energieversorgungsvorrichtung den Stromwert der Energieversorgungsvorrichtung mittels eigener Messungen ermitteln.

Inhalt eines Steuerbefehls, der zwischen der Energieversorgungsvorrichtung und dem Ladegerät ausgetauscht wird, kann beispielsweise sein, dass die Steuerelektronik der Energieversorgungsvorrichtung das Ladegerät anweist, den Ladevorgang zu beenden. Dieser Steuerbefehl von der Steuerelektronik der Energieversorgungsvorrichtung an das Ladegerät wird insbesondere dann versendet, wenn ein minimaler Strom einer der Energiespeicherzellen der Energieversorgungsvorrichtung erreicht wird. Es kann aber im Sinne der Erfindung auch bevorzugt sein, dass nur der oben eingeführte Gesamtstrom gemessen und übermittelt wird. Darüber hinaus kann ein Steuerbefehl von der Steuerelektronik der Energieversorgungsvorrichtung an das Ladegerät gesendet werden, wenn der Ladevorgang von einer ersten Ladephase in eine zweite Ladephase übergehen soll. Mit anderen Worten ist die Steuerelektronik der Energieversorgungsvorrichtung dazu eingerichtet, einen Übergang von einer ersten Ladephase in eine zweite Ladephase des Ladevorgangs zu bewirken, wenn eine maximale Spannung der schwächsten Energiespeicherzelle erreicht ist. Die erste Ladephase des Ladevorgangs ist vorzugsweise dadurch gekennzeichnet, dass der Ladestrom im Wesentlichen konstant ist, während in der zweiten Ladephase des Ladevorgangs eine Ladespannung im Wesentlichen konstant ist. Die Formulierung "im Wesentlichen konstant" stellt für den Fachmann keine unklare Formulierung dar, weil der Fachmann weiß, dass von dieser Formulierung nicht nur mathematisch exakt gleiche Strom- oder Spannungswerte umfasst sein sollen, sondern auch leichte Abweichungen oder Schwankungen, beispielsweise in einem Bereich von +/- 5 %. Es ist im Sinne der Erfindung bevorzugt, dass die Ladespannung der maximalen Spannung der schwächsten Energiespeicherzelle entspricht.

Vorzugsweise definiert die Energieversorgungsvorrichtung bzw. ihre Steuerelektronik in der ersten Ladephase den Ladestrom entsprechend der und optimiert für die schwächste Energiespeicherzelle der Energieversorgungsvorrichtung. In diesem Zusammenhang wird der Ladestrom für die Energieversorgungsvorrichtung anhand der schwächsten Energiespeicherzelle ermittelt, wobei diese Ermittlung des Ladestroms durch die Steuerelektronik der Energieversorgungsvorrichtung erfolgt.

Der Ladestrom kann insbesondere aufgrund der Spannung der Energiespeicherzellen der Energieversorgungsvorrichtung ermittelt werden. Dabei bestimmt vorzugsweise die niedrigste Zellspannung, d.h. die Spannung der "schwächsten Zelle", den Ladestrom, mit dem die Energieversorgungsvorrichtung aufgeladen wird bzw. mit dem die Energieversorgungsvorrichtung aufgeladen werden darf, um die Energiespeicherzellen nicht zu beschädigen. Wenn einzelne Zellen sehr tief entladen waren, ist es im Sinne der Erfindung bevorzugt, dass insbesondere diese Zellen besonders schonend angeladen werden. Aufgrund der mit der Steuerelektronik der Energieversorgungsvorrichtung erfassten Spannungen der Energiespeicherzellen kann ein entsprechender Ladestrom vom Ladegerät angefordert werden. Das Ladegerät ist vorzugsweise dazu eingerichtet, den von der Energieversorgungsvorrichtung angeforderten Ladestrom einzustellen und bereitzustellen.

Der von der Steuerelektronik der Energieversorgungsvorrichtung ermittelte Ladestrom kann anschließend an das Ladegerät übermittelt werden. Es ist im Sinne der Erfindung ganz besonders bevorzugt, dass der Ladestrom in der ersten Ladephase des Ladevorgangs im Wesentlichen konstant gehalten wird, wobei der Ladestrom vorzugsweise einem maximalen Stromwert der schwächsten Zelle entspricht.

Wenn für eine erste Zelle der Energieversorgungsvorrichtung ihr Spannungsmaximum erreicht ist, ändert sich die Ladephase bzw. der Ladevorgang geht von der ersten Ladephase in die zweite Ladephase über. Dieser Übergang von der ersten in die zweite Ladephase kann im Sinne der Erfindung vorzugsweise auch als Umschalten bezeichnet werden. In der zweiten Ladephase wird vorzugsweise die Spannung im Wesentlichen konstant gehalten. Es ist im Sinne der Erfindung bevorzugt, dass die Energiespeicherzellen der Energieversorgungsvorrichtung in Reihe geschaltet sind (Serienschaltung), so dass sich die Spannungen der Energiespeicherzellen vorzugsweise addieren. Die Spannung der Zellen kann vorzugsweise dadurch konstant gehalten werden, dass ein Gesamtspannungswert gehalten wird, bei dem eine erste Zelle der Energieversorgungsvorrichtung ihr Spannungsmaximum erreicht. Es ist im Sinne der Erfindung bevorzugt, dass sich die Spannungen der einzelnen Energiespeicherzellen nicht mehr wesentlich ändern, wenn die Gesamtspannung der Energieversorgungsvorrichtung im Wesentlichen konstant bleibt.

Es ist im Sinne der Erfindung bevorzugt, dass in der zweiten Ladephase des Ladevorgangs die Energiespeicherzelle mit der höchsten Spannung als schwächste Energiespeicherzelle betrachtet wird. Dabei kann es sich auch um dieselbe Zelle handeln, die auch in der ersten Ladephase des Ladevorgangs als schwächste Zelle betrachtet wurde. Es ist im Sinne der Erfindung bevorzugt, dass diejenige Zelle, die am wenigsten Energie speichern kann, beim Entladen als erste Zelle im Wesentlichen leer ist, wobei eine leere Zelle vorzugsweise eine sehr tiefe Spannung aufweist. Beim Laden erreicht diese Zelle vorzugsweise als erste Zelle einen "vollen" Füllstand bzw. Ladezustand. Dadurch weist sie vorzugsweise eine höhere Spannung als die anderen Zellen auf. Das Umschalten in die zweite Ladephase kann vorzugsweise dadurch erreicht werden, dass ab dem Übergang von der ersten in die zweite Ladephase die Spannung des Ladegeräts im Wesentlichen konstant gehalten wird. Dies kann die Energieversorgungsvorrichtung beispielsweise über eine Kommunikationsverbindung dem Ladegerät mitteilen. Vorzugsweise kann der Umschaltpunkt zwischen der ersten und der zweiten Ladephase des Ladevorgangs bei dem n-Fachen der maximalen Zellspannung liegen, wobei "n" für die Anzahl der Energiespeicherzellen in der Energieversorgungsvorrichtung steht. Dieser Wert entspricht vorzugsweise einem Messwert der Summen aller Einzel-Zellspannungen. Der Umschaltpunkt zwischen der ersten und der zweiten Ladephase des Ladevorgangs kann vorzugsweise so gewählt werden, dass er beim Messwert der Gesamtspannung an den Anschlüssen der Energieversorgungsvorrichtung vorliegt. Messzeitpunkt ist dabei vorzugsweise derjenige Zeitpunkt, an dem die Energiespeicherzelle mit der maximalen Spannung ihre spezifizierte Ladespannung erreicht. In der zweiten Ladungsphase wird die Energieversorgungsvorrichtung vorzugsweise in einem Spannungsregelbetrieb geladen. Bei stark abweichenden Zellspannungen kann es im Sinne der Erfindung bevorzugt sein, dass der Übergang zwischen der ersten und der zweiten Ladephase des Ladevorgangs, d.h. das Umschalten zwischen den unterschiedlichen Regelbetrieben, früher stattfindet.

Die Steuerelektronik der Energieversorgungsvorrichtung sendet, wenn für eine erste Zelle der Energieversorgungsvorrichtung ihr Spannungsmaximum erreicht ist, einen Steuerbefehl an das Ladegerät, damit das Ladegerät die Ströme und/oder Spannungen entsprechend reguliert, anpasst bzw. einstellt. Es ist im Sinne der Erfindung bevorzugt, dass der Übergang von der ersten Ladephase in die zweite Ladephase durch einen Steuerbefehl der Steuerelektronik der Energieversorgungsvorrichtung an das Ladegerät initiiert wird. Die Steuerelektronik der Energieversorgungsvorrichtung sendet dem Ladegerät insbesondere einen Steuerbefehl zur Regulierung des Ladestroms, wobei beim Übergang von der ersten Ladephase in die zweite Ladephase des Ladevorgangs von einer Ladephase mit im Wesentlichen konstantem Ladestrom in eine Ladephase mit im Wesentlichen konstanter Ladespannung umgeschaltet wird.

Es ist im Sinne der Erfindung bevorzugt, dass der Ladevorgang beendet wird, wenn ein minimaler Strom einer der Energiespeicherzellen der Energieversorgungsvorrichtung erreicht wird. Der Ladevorgang kann durch die Steuerelektronik der Energieversorgungsvorrichtung insbesondere dann beendet werden, wenn ein Gesamtladestrom der Energieversorgungsvorrichtung erreicht wird. Die Steuerelektronik der Energieversorgungsvorrichtung sendet dann einen entsprechenden Steuerbefehl an das Ladegerät. Die Energieversorgungsvorrichtung kann dann aus dem Ladegerät entnommen oder von dem Ladegerät entkoppelt werden und beispielsweise mit einer Werkzeugmaschine verbunden werden, um die Werkzeugmaschine während ihres Betriebs mit elektrischer Energie zu versorgen.

Es ist im Sinne der Erfindung bevorzugt, dass eine Spannung der Energiespeicherzellen und/ oder der Energieversorgungsvorrichtung von der Steuerelektronik der Energieversorgungsvorrichtung überwacht wird. Dadurch kann vorzugsweise festgestellt werden, wann die maximale Spannung einer Energiespeicherzelle erreicht ist.

Es ist im Sinne der Erfindung bevorzugt, dass in der ersten Ladephase die Energieversorgungsvorrichtung mit einem ersten im Wesentlichen konstanten Teil-Ladestrom und mit einem zweiten im Wesentlichen konstanten Teil-Ladestrom geladen wird. Mit anderen Worten kann die erste Ladephase in beispielsweise zwei Teil-Ladephasen unterteilt werden, wobei jede Teil-Ladephase durch einen eigenen Teil-Ladestrom gekennzeichnet ist. Vorzugsweise kann der zweite Teil-Ladestrom höher bzw. größer sein als der erste Teil-Ladestrom. Die erste Teil-Ladephase mit dem niedrigeren ersten Teil-Ladestrom kann vorzugsweise als Anladen bezeichnet werden, während die Energieversorgungsvorrichtung im Anschluss daran in der zweiten Teil-Ladephase mit dem zweiten Teil-Ladestrom weiter aufgeladen werden kann.

Darüber hinaus kann der Wert des konstanten Ladestroms in der ersten Ladephase auch aufgrund von Temperaturänderungen angepasst werden. Diese Anpassung kann vorzugsweise in Stufen erfolgen, wobei nach einer Änderung der Wert des Ladestroms in der Regel für längere Zeit konstant bleibt.

Vorzugsweise können Strom- und/oder Spannungsdaten zwischen der Energieversorgungsvorrichtung und dem Ladegerät ausgetauscht werden, wobei im Rahmen des vorgeschlagenen Lade-Verfahrens absolute und/oder relative Strom- und/oder Spannungswerte zwischen der Energieversorgungsvorrichtung und dem Ladegerät ausgetauscht werden können. Das bedeutet im Sinne der Erfindung bevorzugt, dass absolute Stromwerte, wie 1 Ampère (A), 4,05 A oder 2,33 A, und oder absolute Spannungswerte, wie 1 Volt (V), 4,05 V oder 2,33 V, von der Energieversorgungsvorrichtung an das Ladegerät gesendet werden können. Alternativ oder ergänzend können aber auch relative Strom- und/oder Spannungswerte zwischen der Energieversorgungsvorrichtung und dem Ladegerät ausgetauscht werden. Das bedeutet im Sinne der Erfindung bevorzugt, dass die Strom- und/oder Spannungswerte in Bezug auf einen Referenzwert, zum Beispiel eine Nennspannung oder einen vorgegebene Stromwert, angegeben werden. Die Angabe der relativen Strom- und/oder Spannungswerte kann beispielsweise in Prozent (%) oder als Anteil erfolgen.

Es ist im Sinne der Erfindung bevorzugt, dass auch eine Temperatur der Energieversorgungsvorrichtung durch die Steuerelektronik der Energieversorgungsvorrichtung überwacht wird. Somit ist die Steuerelektronik der Energieversorgungsvorrichtung dazu eingerichtet, neben Strom- und Spannung der Energieversorgungsvorrichtung bzw. ihrer Energiespeicherzellen auch die Temperatur der Energieversorgungsvorrichtung bzw. ihrer Energiespeicherzellen zu überwachen. Auf diese Weise kann sichergestellt werden, dass sich die Temperatur der Energieversorgungsvorrichtung in dem dafür vorgesehenen Bereich befindet, so dass ein Überhitzen oder thermische Beschädigungen an der Energieversorgungsvorrichtung wirksam vermieden werden.

In einem zweiten Aspekt betrifft die Erfindung ein System, das eine Energieversorgungsvorrichtung und ein Ladegerät zum Laden der Energieversorgungsvorrichtung umfasst, wobei die Energieversorgungsvorrichtung eine Reihe von Energiespeicherzellen aufweist, sowie eine Steuerelektronik. Das System ist dadurch gekennzeichnet, dass die Steuerelektronik der Energieversorgungsvorrichtung dazu eingerichtet ist, Ströme und/oder Spannungen der Energieversorgungsvorrichtung und/oder ihrer Energiespeicherzellen zu überwachen, sowie mit dem Ladegerät in dem Sinne zu kommunizieren, dass Stromdaten, Spannungsdaten und/oder Steuerbefehle zwischen der Energieversorgungsvorrichtung und dem Ladegerät ausgetauscht werden. Darüber hinaus ist die Steuerelektronik der Energieversorgungsvorrichtung dazu eingerichtet, eine schwächste Energiespeicherzelle der Energieversorgungsvorrichtung anhand der Spannungen der Energiespeicherzellen zu bestimmen und einen Übergang von einer ersten Ladephase in eine zweite Ladephase des Ladevorgangs zu bewirken, wenn eine maximale Spannung einer der Energiespeicherzellen erreicht ist. Die für das vorgeschlagene Ladeverfahren beschriebenen Definitionen, technischen Wirkungen und Vorteile gelten für das System aus Energieversorgungsvorrichtung und Ladegerät analog. Das System ist insbesondere dazu eingerichtet, das obige Ladeverfahren durchzuführen. Mithin kann das System als "System zur Durchführung des vorgeschlagenen Ladeverfahrens" bezeichnet werden.

Es ist im Sinne der Erfindung bevorzugt, dass die Energiespeicherzelle mit der tiefsten Spannung zu Beginn der ersten Ladephase des Ladevorgangs als schwächste Energiespeicherzelle betrachtet wird, während in der zweiten Ladephase diejenige Energiespeicherzelle als schwächste Zelle bezeichnet wird, die die höchste Spannung aufweist. Darüber hinaus ist die Steuerelektronik der Energieversorgungsvorrichtung dazu eingerichtet, den Ladevorgang der Energieversorgungsvorrichtung zu beenden, wenn ein minimaler Strom einer der Energiespeicherzellen der Energieversorgungsvorrichtung erreicht wird. Die Energieversorgungsvorrichtung und das Ladegerät können Stromdaten, Spannungsdaten und/oder Steuerbefehle austauschen, wobei Steuerbefehle insbesondere von der Steuerelektronik der Energieversorgungsvorrichtung an das Ladegerät gesendet werden. Beispielsweise kann die Steuerelektronik der Energieversorgungsvorrichtung einen Steuerbefehl zum Übergang von der ersten Ladephase in die zweite Ladephase an das Ladegerät übermitteln. Die Steuerelektronik der Energieversorgungsvorrichtung kann auch dazu eingerichtet sein, eine Temperatur der Energieversorgungsvorrichtung zu überwachen, um sicherzustellen, dass die Zellen der Energieversorgungsvorrichtung stets in einem für sie erlaubten Temperaturbereich vorliegen. Zur Erfassung der Temperatur kann die Energieversorgungsvorrichtung entsprechende Sensoren und Auswerteeinheiten umfassen. Vorzugsweise kann die Energieversorgungsvorrichtung den Ladevorgang unterbrechen, wenn die Energieversorgungsvorrichtung erfasst, dass einer der Zellen oder die Energieversorgungsvorrichtung als Ganzes eine Temperatur außerhalb des erlaubten Temperaturbereichs aufweist. Dazu kann die Steuerelektronik der Energieversorgungsvorrichtung einen entsprechenden Steuerbefehl an das Ladegerät senden. Es ist im Sinne der Erfindung bevorzugt, dass in der ersten Ladephase des Ladevorgangs der Ladestrom im Wesentlichen konstant ist und dass in der zweiten Ladephase des Ladevorgangs eine Ladespannung im Wesentlichen konstant ist.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:
- Fig. 1: schematische Ansicht einer Werkzeugmaschine mit einer bevorzugten Ausgestaltung der Energieversorgungsvorrichtung des Systems
- Fig. 2: schematische Ansicht einer bevorzugten Ausgestaltung des Systems

### Ausführungsbeispiele und Figurenbeschreibung:

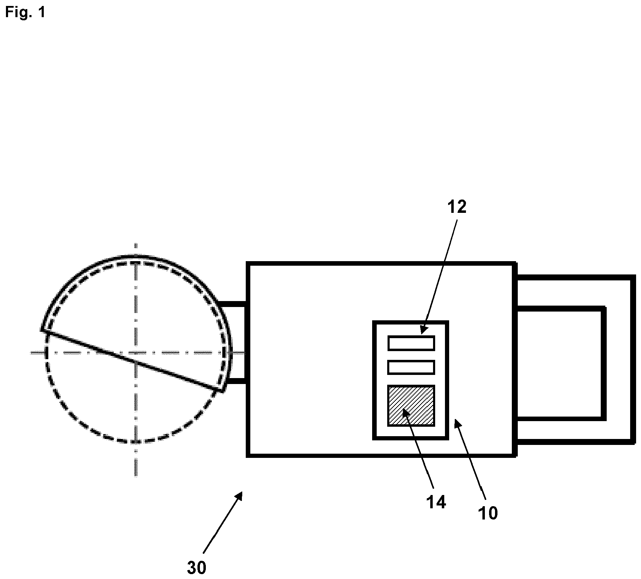

Fig. 1 zeigt eine schematische Ansicht einer Werkzeugmaschine 30 mit einer Energieversorgungsvorrichtung 10. Bei der Werkzeugmaschine 30 kann es sich beispielsweise um einen Trennschleifer handeln, der als Werkzeug eine Trennscheibe aufweist. Die Werkzeugmaschine 30 kann einen Griff aufweisen, der beispielsweise als hinterer Handgriff ausgebildet ist. Darüber hinaus kann die Werkzeugmaschine 30 in an sich bekannter weise Bedienelemente, wie Schalter oder Knöpfe, aufweisen. Außerdem kann die Werkzeugmaschine 30 einen Motor (nicht dargestellt) aufweisen, der einen Verbraucher darstellen und von der Energieversorgungsvorrichtung 10 mit elektrischer Energie versorgt werden kann. Die Energieversorgungsvorrichtung 10, die in Fig. 1 abgebildet ist, weist in dem dargestellten schematischen Ausführungsbeispiel zwei Energiespeicherzellen 12 auf. Darüber hinaus umfasst die in Fig. 1 dargestellte Energieversorgungsvorrichtung 10 eine Steuerelektronik 14.

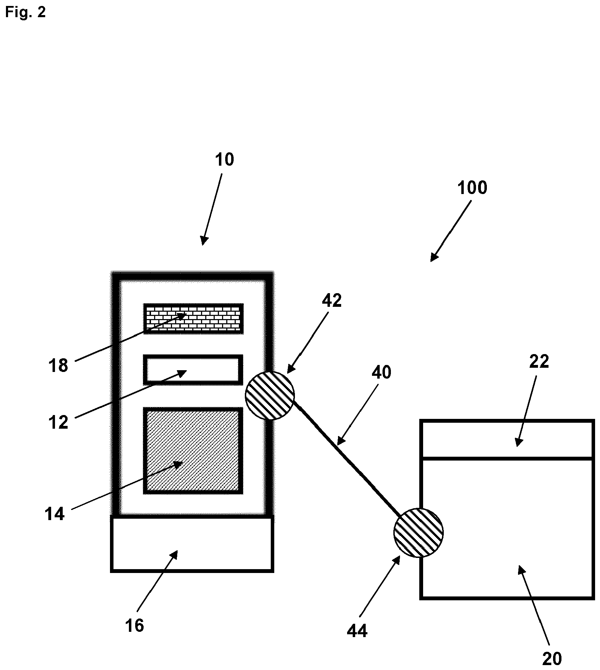

Fig. 2 zeigt eine schematische Ansicht einer bevorzugten Ausgestaltung des vorgeschlagenen Systems 100 aus Energieversorgungsvorrichtung 10 und Ladegerät 20. Die Energieversorgungsvorrichtung 10 kann mit dem Ladegerät 20 verbunden werden, um aufgeladen zu werden. Dazu kann eine Schnittstelle 16, 22 vorgesehen sein, wobei die Energieversorgungsvorrichtung 10 und das Ladegerät 20 über die jeweiligen Schnittstellenpartner 16, 22 miteinander verbunden werden können. Die Energieversorgungsvorrichtung 10 weist in dem in Fig. 2 dargestellten Ausführungsbeispiel zwei Energiespeicherzellen 12 auf, wobei eine der Energiespeicherzellen 12 die schwächste Energiespeicherzelle 18 der Energieversorgungsvorrichtung 10 darstellt. Selbstverständlich kann die Energieversorgungsvorrichtung 10 mehr als zwei Energiespeicherzellen 12 umfassen, zum Beispiel fünf, sechs, acht, zehn, zwölf oder achtzehn Energiespeicherzellen 12. Die Energieversorgungsvorrichtung 10 weist darüber hinaus eine Steuerelektronik 14 auf. Die Energieversorgungsvorrichtung 10 kann über eine Kommunikationsverbindung 40 mit dem Ladegerät 20 kommunizieren, d.h. insbesondere Stromdaten, Spannungsdaten und/oder Steuerbefehle austauschen. Dazu können die Energieversorgungsvorrichtung 10 und das Ladegerät 20 Kommunikationsmodule 42, 44 aufweisen. Das Kommunikationsmodul 42 der Energieversorgungsvorrichtung 10 kann - wie in Figur 2 dargestellt - Bestandteil der Energieversorgungsvorrichtung 10 sein. Es kann aber im Sinne der Erfindung auch bevorzugt sein, dass das Kommunikationsmodul 42 der Energieversorgungsvorrichtung 10 Bestandteil der Steuerelektronik 14 der Energieversorgungsvorrichtung 10 ist.

### Bezugszeichenliste

- 10: Energieversorgungsvorrichtung
- 12: Energiespeicherzellen
- 14: Steuerelektronik
- 16: Schnittstelle der Energieversorgungsvorrichtung
- 18: schwächste Energiespeicherzelle
- 20: Ladegerät
- 22: Schnittstelle des Ladegeräts
- 30: Werkzeugmaschine
- 40: Kommunikationsverbindung zwischen der Energieversorgungsvorrichtung und dem Ladegerät
- 42: Kommunikationsmodul der Energieversorgungsvorrichtung
- 44: Kommunikationsmodul des Ladegeräts
- 100: System

## Patentansprüche

1. Verfahren zum Laden einer Energieversorgungsvorrichtung (10) durch ein Ladegerät (20), wobei die Energieversorgungsvorrichtung (10) eine Reihe von Energiespeicherzellen (12) aufweist, sowie eine Steuerelektronik (14),
**gekennzeichnet durch die folgenden Verfahrensschritte**
a) Verbinden der Energieversorgungsvorrichtung (10) mit dem Ladegerät (20), um die Energieversorgungsvorrichtung (10) aufzuladen,
b) Start des Ladevorgangs in einer ersten Ladephase,
c) Bestimmung einer schwächsten Energiespeicherzelle (18) durch die Steuerelektronik (14) der Energieversorgungsvorrichtung (10), wobei die Energiespeicherzelle (12) mit der tiefsten Spannung zu Beginn der ersten Ladephase des Ladevorgangs als schwächste Energiespeicherzelle (18) betrachtet wird,
d) Ermittlung eines Ladestroms für die Energieversorgungsvorrichtung (10) durch die Steuerelektronik (14) anhand der schwächsten Energiespeicherzelle (18),
e) Übermittlung des zuvor ermittelten Ladestroms von der Steuerelektronik (14) an das Ladegerät (20),
f) Laden der Energieversorgungsvorrichtung (10) mit dem zuvor ermittelten Ladestrom in der ersten Ladephase,
g) Übergang von der ersten Ladephase in eine zweite Ladephase des Ladevorgangs, wenn eine maximale Spannung einer Energiespeicherzelle (12) erreicht ist.

2. Verfahren nach Anspruch 1
**dadurch gekennzeichnet, dass**
der Ladevorgang beendet wird, wenn ein minimaler Strom einer der Energiespeicherzellen (12) der Energieversorgungsvorrichtung (10) erreicht wird.

3. Verfahren nach Anspruch 1 oder 2
**dadurch gekennzeichnet, dass**
eine Spannung und/oder ein Strom der Energiespeicherzellen (12) und/oder der Energieversorgungsvorrichtung (10) von der Steuerelektronik (14) der Energieversorgungsvorrichtung (10) überwacht wird.

4. Verfahren einem der vorhergehenden Ansprüche
**dadurch gekennzeichnet, dass**
Strom- und/oder Spannungsdaten zwischen der Energieversorgungsvorrichtung (10) und dem Ladegerät (20) ausgetauscht werden.

5. Verfahren nach einem der vorhergehenden Ansprüche
**dadurch gekennzeichnet, dass**
in der ersten Ladephase des Ladevorgangs der Ladestrom im Wesentlichen konstant ist und dass in der zweiten Ladephase des Ladevorgangs eine Ladespannung im Wesentlichen konstant ist.

6. Verfahren nach einem der vorhergehenden Ansprüche
**dadurch gekennzeichnet, dass**
im Rahmen des Verfahrens absolute und/oder relative Strom- und/oder Spannungswerte zwischen der Energieversorgungsvorrichtung (10) und dem Ladegerät (20) ausgetauscht werden.

7. Verfahren nach einem der vorhergehenden Ansprüche
**dadurch gekennzeichnet, dass**
der Übergang von der ersten Ladephase in die zweite Ladephase durch einen Steuerbefehl der Steuerelektronik (14) der Energieversorgungsvorrichtung (10) an das Ladegerät (20) initiiert wird.

8. Verfahren nach einem der vorhergehenden Ansprüche
**dadurch gekennzeichnet, dass**
auch eine Temperatur der Energieversorgungsvorrichtung (10) durch die Steuerelektronik (14) der Energieversorgungsvorrichtung (10) überwacht wird.

9. System (100) umfassend eine Energieversorgungsvorrichtung (10) und ein Ladegerät (20) zum Laden der Energieversorgungsvorrichtung (10), wobei die Energieversorgungsvorrichtung (10) eine Reihe von Energiespeicherzellen (12) aufweist, sowie eine Steuerelektronik (14),
**dadurch gekennzeichnet, dass**
die Steuerelektronik (14) der Energieversorgungsvorrichtung (10) dazu eingerichtet ist, Ströme und/oder Spannungen der Energieversorgungsvorrichtung (10) und/oder ihrer Energiespeicherzellen (12) zu überwachen, sowie mit dem Ladegerät (20) in dem Sinne zu kommunizieren, dass Stromdaten, Spannungsdaten und/oder Steuerbefehle zwischen der Energieversorgungsvorrichtung (10) und dem Ladegerät (20) ausgetauscht werden, wobei die Steuerelektronik (14) der Energieversorgungsvorrichtung (10) darüber hinaus dazu eingerichtet ist, eine schwächste Energiespeicherzelle (18) der Energieversorgungsvorrichtung (10) anhand der Spannungen der Energiespeicherzellen (12) zu bestimmen und einen Übergang von einer ersten Ladephase in eine zweite Ladephase des Ladevorgangs zu bewirken, wenn eine maximale Spannung einer der Energiespeicherzelle (12) erreicht ist.

10. System (100) nach Anspruch 9
**dadurch gekennzeichnet, dass**
zu Beginn der ersten Ladephase die Energiespeicherzelle (12) mit der tiefsten Spannung als schwächste Energiespeicherzelle (18) betrachtet wird und dass zu Beginn der zweiten Ladephase die Energiespeicherzelle (12) mit der höchsten Spannung als schwächste Energiespeicherzelle (18) betrachtet wird.

11. System (100) nach Anspruch 9 oder 10
**dadurch gekennzeichnet, dass**
die Steuerelektronik (14) der Energieversorgungsvorrichtung (10) dazu eingerichtet ist, den Ladevorgang der Energieversorgungsvorrichtung (10) zu beenden, wenn ein minimaler Strom einer der Energiespeicherzellen (12) der Energieversorgungsvorrichtung (10) erreicht wird.

12. System (100) nach einem der Ansprüche 9 bis 11
**dadurch gekennzeichnet, dass**
die Energieversorgungsvorrichtung (10) und das Ladegerät (20) dazu eingerichtet sind, Strom- und/oder Spannungsdaten auszutauschen.

13. System (100) nach einem der Ansprüche 9 bis 12
**dadurch gekennzeichnet, dass**
die Steuerelektronik (14) der Energieversorgungsvorrichtung (10) dazu eingerichtet ist, einen Steuerbefehl zum Übergang von der ersten Ladephase in die zweite Ladephase an das Ladegerät (20) zu übermitteln.

14. System (100) nach einem der Ansprüche 9 bis 13
**dadurch gekennzeichnet, dass**
die Steuerelektronik (14) der Energieversorgungsvorrichtung (10) dazu eingerichtet ist, eine Temperatur der Energieversorgungsvorrichtung (10) zu überwachen.

15. System (100) nach einem der Ansprüche 9 bis 14
**dadurch gekennzeichnet, dass**
in der ersten Ladephase des Ladevorgangs der Ladestrom im Wesentlichen konstant ist und dass in der zweiten Ladephase des Ladevorgangs eine Ladespannung im Wesentlichen konstant ist.
